# EUROPÄISCHE PATENTSCHRIFT

(11) **EP 3 030 452 B1**
(45) Veröffentlichungstag und Bekanntmachung des Hinweises auf die Patenterteilung: **23.10.2019**
(21) Anmeldenummer: 14747922.4
(22) Anmeldetag: 01.08.2014
(51) Int. Cl.: B60L 50/50

(54) **VERFAHREN ZUM BETRIEB EINES BATTERIESYSTEMS**
METHOD FOR OPERATING A BATTERY SYSTEM
PROCÉDÉ PERMETTANT DE FAIRE FONCTIONNER UN SYSTÈME DE BATTERIES

(30) Priorität: 05.08.2013 DE 102013215319
(43) Veröffentlichungstag der Anmeldung: 15.06.2016
(73) Patentinhaber: Robert Bosch GmbH, 70442 Stuttgart (DE); Samsung SDI Co., Ltd., Yongin-si, Gyeonggi-do 446-577 (KR)
(72) Erfinder: STIMM, Frank, 70565 Stuttgart (DE); STEIL, Michael, 70825 Korntal-Muenchingen (DE); DOERR, Alfons, 70597 Stuttgart (DE); BOSCH, Andreas, 71739 Oberriexingen (DE)
(74) Vertreter: Bee, Joachim
(86) Internationale Anmeldenummer: PCT/EP2014/066568
(87) Internationale Veröffentlichungsnummer: WO 2015/018747

(56) Entgegenhaltungen:
- DE-A1-102012 211 414
- FR-A1- 2 953 953
- US-A1- 2002 063 001
- US-A1- 2003 088 343
- US-A1- 2003 169 001
- US-A1- 2004 044 448
- US-A1- 2010 305 794
- US-A1- 2012 222 438

## Beschreibung

### Stand der Technik

DE 101 39 050 A1 bezieht sich auf ein Verfahren und eine Vorrichtung zur Durchführung eines automatischen Ladezustandsausgleichs. Dabei werden statistisch Daten über die Fahrgewohnheiten des Fahrzeughalters erfasst. Diese Daten werden nach der Detektion der Notwendigkeit eines Ladezustandsausgleichs dazu verwendet, einen optimalen Zeitpunkt für die Initiierung einer Vorbereitungsphase für den Ladezustandsausgleich und der nachfolgenden Durchführungsphase bereitzustellen.

DE 10 2005 023 365 A1 bezieht sich auf ein Batteriemanagement für Batterien in Hybridfahrzeugen. Es erfolgt die Bestimmung einer Batteriegröße wie T, SOC, SOH mittels eines mathematischen Batteriemodells, das das thermische und/oder elektrische Verhalten einer Batterie beschreibt. Die Batterie kann besonders dann effektiv genutzt werden, wenn die zukünftige elektrische Belastung I_{Bat}(t) der Batterie (4) geschätzt wird und das Batteriemodell die zukünftige Entwicklung der Batteriegröße Z, SOC, SOH auf Grundlage der geschätzten elektrischen Belastung I_{Bat}(t) berechnet.

US 2012/222438 A1 offenbart ein Klimatisierungssystem für ein Fahrzeug zum Durchführen einer Kühlung / Luftheizung eines Temperatursteuerungsobjekts umfassend: eine Temperaturerfassungseinheit, die eine Temperatur des Temperatursteuerungsobjekts erfasst; eine Steuerung, die das Klimatisierungssystem basierend auf einer von der Temperaturerfassungseinheit erfassten Temperatur steuert; eine Vorhersageeinheit, die eine Vorlauftemperatur des Temperatursteuerungsobjekts basierend auf mindestens einer erfassten Temperatur, die von der Temperaturerfassungseinheit erfasst wird, und einem aktuellen Fahrzeugfahrzustand vorhersagt; eine Zieltemperaturänderungseinheit, die eine Zieltemperatur des Temperatursteuerungsobjekts oder eine Zieltemperatur eines Kühlmediums in dem Klimatisierungssystem für ein Fahrzeug basierend auf einem Ergebnis der Vorhersage durch
die Vorhersageeinheit ändert; wobei der Controller das Kühlen / Erwärmen der Luft des Temperatursteuerungsobjekts basierend auf einer Zieltemperatur steuert, die durch die Zieltemperaturänderungseinheit geändert wird.

US2002/063001 A1 (Lennevi) offenbart eine Fahrzeugarchitektur zur Steuerung eines Elektrofahrzeugs, wobei die Fahrzeugarchitektur ein Master-Steuergerät (VCU 100) umfasst, in welches Funktionalitäten eines Batteriemanagementsystems (BMU) und einer Leistunselektronik (DTC) ausgelagert sind.

Die Batterie eines elektrisch betriebenen Fahrzeuges, eines Hybridfahrzeuges oder eines Elektrofahrzeugs umfasst eine Anordnung und elektrische Verschaltung von Sekundärzellen wie beispielsweise Lithium-Ionen-Batteriezellen. Des Weiteren beinhaltet die Batterie zumeist eine Steuerungs- bzw. eine Regelungseinrichtung, welche dazu dient, die Batteriezellenspannungen, die Batteriezellentemperaturen und den Gesamtstrom zu messen und aus diesen Messgrößen modellbasiert die maximalen elektrischen Leistungen bzw. die Ströme vorherzusagen, welche ein elektrischer Antrieb in den nächsten Zeitschritten von der Batterie abfordern darf. Das Ergebnis wird dem Antrieb direkt beispielsweise über ein Datenbus-System, wie beispielsweise einen CAN-Bus übermittelt.

Der elektrische Antrieb eines Fahrzeugs, genauer gesagt die Leistungselektronik, erhält ebenfalls über ein derartiges Bus-System ein zu stellendes Wunsch-Drehmoment vom Fahrzeug mitgeteilt, welches seinen Ursprung beispielsweise in der Gaspedalstellung und damit beim Fahrer hat. Die Leistungselektronik versucht dieses Soll-Drehmoment durch das Beschalten einer B6-Halbleiterbrücke bereitzustellen. Die B6-Halbleiterbrücke ist in der Lage, ihre Eingangsspannung moduliert auf die Phasen der elektrischen Maschinen aufzuschalten und durch den zustande kommenden Strom ein Drehmoment zu erzeugen. Die Leistungselektronik soll sich zu jeder Zeit an die Leistungs-/Stromprediktion der Batterie halten, um die Batterie nicht über das erlaubte Maß hinaus zu beanspruchen.

Da die Batterie und der Antrieb eine physikalisch verbundene Einheit darstellen, ist es durchaus möglich, dass die Leistungselektronik der Batterie höhere Leistungen bzw. Ströme abfordert, als es der Batterie zuträglich ist. Die Batterie hat in diesem Falle nur die theoretische letzte Möglichkeit, ihre Hauptschütze zu öffnen. Wenn die Batterie dies nicht tut, was in den meisten Fahrsituationen aus Sicherheitsgründen auch nicht möglich sein wird, dann wirkt sich das folgendermaßen und je nach Überlastung auf die Batterie aus:
Es kann zu einer stärker fortschreitenden Alterung der Batteriezellen kommen. Ferner steht eine stärkere Erwärmung der Batteriezellen zu befürchten und daraus folgend eventuell die Verletzung sicherheitskritischer Temperaturniveaus. Schließlich erfolgt eine Verletzung softwareseitig hinterlegter Spannungsgrenzen für die Batteriezelle.

Der Extremfall, welcher auch die Leistungselektronik in Mitleidenschaft ziehen würde, wäre ein an die Batterie angelegter niederohmiger Kurzschluss über die Brückenschaltung in der Leistungselektronik.

### Darstellung der Erfindung

Erfindungsgemäß wird eine Fahrzeugarchitektur zur Steuerung und Regelung eines elektrischen Antriebes eines Elektro- oder Hybridfahrzeugs vorgeschlagen, mit einer Leistungselektronik, die einerseits mit dem elektrischen Antrieb und andererseits einer Batterie- oder einem Batteriesystem verbunden ist, wobei dem letztgenannten ein Batteriemanagementsystem zugeordnet ist. Die erfindungsgemäß vorgeschlagene Fahrzeugarchitektur zeichnet sich dadurch aus, dass diese ein Master-Steuergerät umfasst, in welches Funktionalitäten zumindest des Batteriemanagementsystems und der Leistungselektronik des elektrischen Antriebes ausgelagert sind. Das zusätzliche Master-Steuergerät der erfindungsgemäß vorgeschlagenen Fahrzeugarchitektur bietet eine übergeordnete Managementmöglichkeit, über welche übergreifende Aufgaben, wie zum Beispiel die Optimierung von verschiedenen Parametern, wie zum Beispiel die notwendige Kühlung der Batterie- bzw. des Batteriesystems oder eine Abstimmung auf verschiedene Lade- bzw. Fahrzustände des Fahrzeugs vorgenommen werden kann. Durch das erfindungsgemäß vorgeschlagene Master-Steuergerät wird eine Steuer- und/oder Regelungsinstanz geschaffen oder eine Softwarefunktionalität auf einem bereits bestehenden Steuergerät verwirklicht, über welche Zugriff auf alle relevanten Untersysteme, wie beispielsweise ein Kühlsystem des Fahrzeugs, wie beispielsweise das Kühlsystem für die Batterie oder das Batteriesystem, die Leistungselektronik für den elektrischen Antrieb oder auch das Batteriemanagementsystem der Batterie bzw. des Batteriesystems möglich ist.

So kann die Fahrzeugarchitektur neben der Batterie bzw. dem Batteriesystem eine Battery Disconnect Unit, welche Teil des Batteriesystems ist und innerhalb oder außerhalb der Batterie angebracht sein kann, ferner die Leistungselektronik umfassen, welche der elektrischen Maschine, d.h. des E-Antriebes zugeordnet ist. Die Batterie- bzw. das Batteriesystem wird seinerseits von einem Batteriemanagementsystem überwacht, das über Messgeräteinformationen über Spannungen und Temperaturen und Ströme in der Batterie erhält und unter anderem auch ein der Batterie bzw. dem Batteriesystem zugeordnetes Kühlsystem ansteuert.

Das erfindungsgemäß vorgeschlagene Master-Steuergerät ist innerhalb der Fahrzeugarchitektur mit einem Navigationssystem des Fahrzeugs verbunden, ferner mit dem bereits erwähnten Kühlsystem, der Leistungselektronik des E-Antriebes sowie einer Battery Disconnect Unit.

Die Wirkungsweise der erfindungsgemäß eingesetzten zentralen Steuer und/oder Regelungsinstanz liegt nun darin, dass dieses mittels geeigneter Algorithmen und unter Rückgriff auf eine Verwendung von Informationen aus dem Navigationssystem des Fahrzeugs über die jeweils zu fahrende Wegstrecke sicherstellen kann, dass das Fahrzeug optimal gehandhabt werden kann. So besteht die Möglichkeit, durch das erfindungsgemäß vorgeschlagene Master-Steuergerät unmittelbar das Kühlsystem der Batterie bzw. des Batteriesystems anzusteuern, welches beispielsweise in der heißen Jahreszeit bei hohen Außentemperaturen erforderlich werden kann. Des Weiteren kann in das Master-Steuergerät eine Funktionalität der Leistungselektronik dahingehend ausgelagert werden, dass das Master-Steuergerät auch eine Reduzierung der Drehmomentanforderung des Fahrzeugs und damit der Fahrzeugleistung durch Einwirkung auf eben jene Leistungselektronik ermöglicht. Dies erlaubt es, die Operabilität des Fahrzeugs beispielsweise hinsichtlich der Reichweite zu verbessern und nur bestimmte Fahrzeugleistungen und Fahrzeuggeschwindigkeiten und Drehmomente zuzulassen, die keine negativen Auswirkungen auf einen kontinuierlichen Weiterbetrieb der Fahrzeugbatterie bzw. des Batteriesystems haben.

Des Weiteren besteht die Möglichkeit, in dem erfindungsgemäß vorgeschlagenen Master-Steuergerät adaptive Steuerungen bzw. Regelalgorithmen zu implementieren, die das Gesamtsystem "Fahrzeug" in optimaler Weise auf die Fahrweise des Fahrers bzw. auf die zu erwartenden Fahrsituationen abstimmen. Optional kann unter Rückgriff auf die vom Navigationssystem des Fahrzeugs gelieferten Daten eine Reichweitenoptimierung für die zu erwartende Fahrstrecke vorgenommen werden. Durch das erfindungsgemäß eingesetzte, eine übergeordnete Steuerinstanz darstellende Master-Steuergerät besteht die Möglichkeit, zusätzliche Fahrzeugkomponenten, wie beispielsweise einen elektrischen Klimaanlagenkompressor, einen AC/DC-Wandler zum Laden mit Wechselstrom (On-Board-Ladegerät), HV-Heizgeräte (HV-PTC's'), eine Koordination einer Gleichstromschnellladeschnittstelle (DC-Schnellladesäule, Stromtankstelle) und DC/DC-Wandlern, die zur Stützung des 12 V Bordnetzes eingesetzt werden können, über eben jenes Master-Steuergerät zu steuern oder regeln zu können.

### Vorteile der Erfindung

Durch die erfindungsgemäß vorgeschlagene Lösung kann in vorteilhafter Weise eine übergeordnete Managementinstanz geschaffen werden, welche übergreifende Aufgaben zum Teil einander widersprechender Parameter, wie beispielsweise Drehmomentanforderung und Ladekapazität der Batterie- bzw. des Batteriesystems und damit einhergehende Konflikte bei kollidierenden Anfragen löst. Das Master-Steuergerät umfasst dazu geeignete Algorithmen und kann beispielsweise unter einem möglichen Rückgriff auf die Informationen, die das Fahrzeugnavigationssystem liefert, eine Optimierung einer zu fahrenden Wegstrecke sicherstellen. Das Auslagern von Funktionalitäten aus den Steuergeräten, beispielsweise dem Hauptsteuergerät des Batteriemanagementsystems sowie der Leistungselektronik des elektrischen Antriebes und gegebenenfalls weiterer Fahrzeugkomponente auf das Master-Steuergerät, bietet technische und wirtschaftliche Vorteile. Es ist nämlich nicht mehr jedes System für sich als ein geschlossenes System zu gestalten hinsichtlich gegenüber der Außenwelt; das Gesamtsystem wird durch das Master-Steuergerät geschlossen. Der schlagende Vorteil der erfindungsgemäß vorgeschlagenen Fahrzeugarchitektur ist darin zu erblicken, dass nun nicht mehr eine Anzahl unabhängiger Steuergeräte miteinander kommuniziert und die Effizienz des Fahrzeugs davon abhängt, wie gut diese Kommunikation auf Bussen, wie beispielsweise CAN-Datenbussen funktioniert. Vielmehr ist durch die erfindungsgemäß vorgeschlagene Lösung eine Fahrzeugarchitektur geschaffen, die eine übergeordnete Steuerungs- und/oder Regelungsinstanz aufweist, die durch globale Koordination und Abstimmung der Betriebsparameter die Betriebsstrategie koordiniert und schlussendlich auch bestimmt.

Die erfindungsgemäß vorgeschlagene Lösung ist besonders effizient hinsichtlich des Berechnungsaufwandes sowie der Zeitdauer, die für diese Berechnungen erforderlich ist. Durch die erfindungsgemäß vorgeschlagene Lösung wird vermieden, dass mehrere Systeme miteinander kommunizieren müssen und darauf folgend jedes Untersystem für sich regeln und steuern muss. Das erfindungsgemäß vorgeschlagene Gesamtsystem kann robuster gegen Folgen von Softwarefehlern sein, beziehungsweise einfacher abgeprüft werden im Vergleich zu einzelnen Untersystemen. Bei den einzelnen Untersystemen wären theoretisch alle Bedingungen nachzubilden, die zwischen die bei der Kommunikation beziehungsweise bei der Interaktion zwischen den jeweiligen Untersystemen vorkommen könnten um eine vollständige Testabdeckung zu erreichen. Da aufgrund der Verminderung von Berechnungsdauern Zeit eingespart wird, da nunmehr Abstimmungsabläufe zwischen beispielsweise Zweisteuergeräten überflüssig geworden sind, kann eine schnellere Reglung beziehungsweise Steuerung des Mastersteuergerätes erfolgen. Dies führt im Falle insbesondere sicherheitsrelevanter Funktionen zu einer Erhöhung der Sicherheit und kann damit zum Schutz von Mensch, Material und Umwelt nicht unwesentlich beitragen.

### Kurze Beschreibung der Zeichnung

Anhand der Zeichnung wird die Erfindung nachstehend eingehender beschrieben.

Die einzige Figur zeigt in schematischer Weise die Komponenten der erfindungsgemäß vorgeschlagenen Fahrzeugarchitektur.

### Ausführungsformen der Erfindung

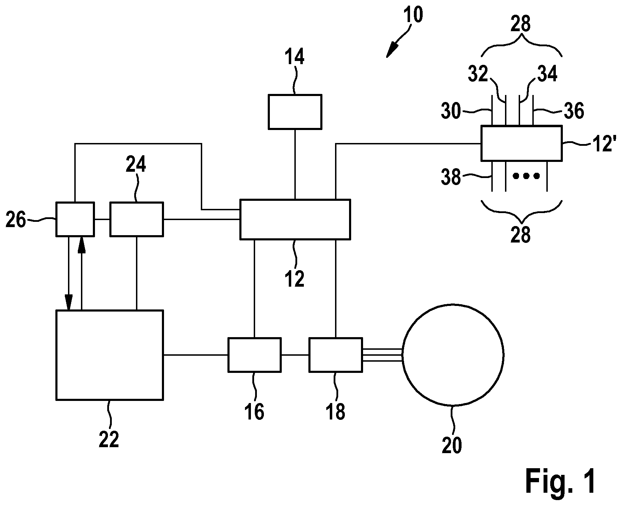

Der Darstellung gemäß Figur 1 sind in schematischer Widergabe einzelne Komponenten einer erfindungsgemäß vorgeschlagenen Fahrzeugarchitektur zu entnehmen.

Eine Fahrzeugarchitektur 10 umfasst ein zusätzliches Kontrollorgan 12, welches nachfolgend als Master-Steuergerät bezeichnet wird. Das Master-Steuergerät 12 steht mit einem in die Fahrzeugarchitektur 10 integrierten Navigationssystem 14 des Fahrzeugs in Verbindung.

Die Fahrzeugarchitektur 10 umfasst darüber hinaus eine Battery Disconnect Unit (BDU), vergleiche Position 16. Eine Battery Disconnect Unit 16 beinhaltet Hauptschütze, die zum Zuschalten oder Abtrennen der Batterie 22 beziehungsweise des Batteriesystems 22 vom Hochvoltportnetz dienen. Des Weiteren kann die Battery Disconnect Unit 16 Vorladeschütze mit seriell geschalteten Vorladewiderständen umfassen, um ein sanftes Vorladen von Zwischenkreiskapazitäten im Fahrzeug zu ermöglichen. Des Weiteren kann eine Battery Disconnect Unit 16 optional Schnellladeschütze aufweisen, welche nochmals seriell zu den Hauptschützen geschaltet sind, um Gleichstromladeschnittstellen separat abschalten zu können. Ein Beispiel sind beispielsweise Leitungen zu einer Steckdose, welche sich hinter einem herkömmlichen Tankdeckel verbirgt. Dort könnte eine Fahrzeugladesäule eingesteckt werden. Die Leitung, die innerhalb des Fahrzeugs bis zu dieser Schnittstelle verläuft, kann in den Schnellladeschütze nochmal separat geschaltet werden. Des Weiteren kann eine Battery Disconnect Unit 16 eine Stromsensorik umfassen, um den Batteriestrom messen zu können, basierend auf Shunt - und/oder Hall-Messtechnik. Darüber hinaus können Battery Disconnect Unit 16 auch Schmelzsicherungen oder pyrotechnisch wirksame Trennelemente umfassen, die im Falle eines auftretenden Kurzschlusses bei sehr hohen Strömen das Batteriepack vom Fahrzeughochvoltbordnetz trennen können, wenn beispielsweise die Trennfähigkeit der Hauptschütze bei dieser Stromhöhe (Kurzschluss) überschritten ist. In der Battery Disconnect Unit 16 können darüber hinaus Spannungsmessungen an verschiedenen Punkten für die jeweiligen Batteriepackspannungen, Schütz- und Sicherungsdiagnosen vorgenommen werden. Darüber hinaus können in einer Battery Disconnect Unit 16 Temperatursensoren, Feuchtigkeitssensoren, Drucksensoren, Gassensoren vorgesehen sein, um weitere Informationen aus dem Batteriepack auswerten zu können. Von den einzelnen Batteriezellen der Batterie 22 bzw. des Batteriesystems 22 verlaufen Stromschienen beziehungsweise Stromkabel zur Battery Disconnect Unit 16. An dieser befinden sich zumeist die Schnittstellen zum Fahrzeug. Dort werden Fahrzeugkabelbäume eingesteckt und damit die Batterie mit dem Bordnetz des Fahrzeugs verbunden. Es besteht die Möglichkeit, die Battery Disconnect Unit 16 innerhalb des Batteriepacks der Batterie 22 zu verbauen oder in der Nähe des Batteriepacks anzuordnen. Es ist nicht zwangsläufig erforderlich, dass die Battery Disconnect Unit ein abgeschlossenes Gehäuse besitzt, es besteht hingegen die Möglichkeit, die oben kursorisch aufgestellten Komponenten innerhalb des Batteriepacks zu platzieren.

Das Master-Steuergerät 12 ist ferner mit einer Leistungselektronik 18 mindestens eines elektrischen Antriebs 20, d.h. der Antrieb eines Hybrid- oder Elektrofahrzeugs verbunden.

Des Weiteren besteht eine direkte Verbindung zwischen dem Master-Steuergerät 12 und einem Kühlsystem 26, welches einer Batterie bzw. einem Batteriesystem 22 unmittelbar zugeordnet ist. Auch steht das Master-Steuergerät 12 mit einem Batteriemanagementsystem 24, über welche die Batterie 22 bzw. das Batteriesystem 22 hinsichtlich der Batteriespannungen, der Temperaturen und der fließenden Ströme überwacht wird.

Das zusätzliche Kontrollorgan umfasst einen Erweiterungsteil 12', der eine Anzahl zusätzlicher Anschlüsse 28 umfasst. Die Anzahl zusätzlicher Anschlüsse 28 bietet die Möglichkeit, optional zusätzliche Fahrzeugkomponenten, wie beispielsweise einen elektrischen Klimaanlagenkompressor 30 sowie einen AC/DC-Wandler 32 als On-Board-Ladegerät anzuschließen. Zu den zusätzlichen Anschlüssen 28 ist ferner mindestens ein Anschluss für ein Heizgerät 34 zu zählen (HV-PTC's, positive temperature coefficient). Des Weiteren besteht die Möglichkeit, im Rahmen der zusätzlichen Anschlüsse 28 an den Erweiterungsteil 12' des Master-Steuergerätes 12 eine Gleichstrom-Schnellladeschnittstelle 38 (DC-Schnellladesäule, Stromtankstelle) anzuschließen, ferner könnte im Rahmen der zusätzlichen Anschlüsse 28 ein DC/DC-Wandler 38 für das 12 V-Netz angeschlossen werden.

Bei bisherigen Anwendungen wird durch das Batteriemanagementsystem 24, welches der Batterie 22 bzw. dem Batteriesystem 22 zugeordnet ist, nur eben dieses isoliert auf mögliche Schäden bzw. auf die Alterung der in der Batterie 22 bzw. dem Batteriesystem 22 verbauten Batteriezellen vorgenommen. Ebenso erfolgt ein Management der Leistungselektronik 18, welche dem E-Antrieb 20 zugeordnet ist, nur isoliert im Hinblick auf mögliche Schäden und optimierte Bedingungen in der Leistungselektronik. Zwar kommunizieren die Leistungselektronik 18 und das Batteriemanagementsystem 24 miteinander, jedoch fehlt es an einer übergeordneten Steuerinstanz, welche kollidierende Anforderungen auflöst. Durch das erfindungsgemäß vorgeschlagene Master-Steuergerät 12, welches in die Fahrzeugarchitektur 10 integriert wird, wird eine Steuerinstanz geschaffen, welche Zugriff auf alle relevanten Untersysteme, insbesondere auf das Kühlsystem 26, das Batteriemanagementsystem 24 sowie die Leistungselektronik 18 des mindestens einen elektrischen Antriebs 20 aufweist. Die Wirkungsweise der erfindungsgemäß vorgeschlagenen Fahrzeugarchitektur 10 findet ihren Niederschlag darin, dass das Master-Steuergerät 12 mittels geeigneter Algorithmen und auch unter einer optimalen Verwendung der Informationen aus dem Fahrzeugnavigationssystem 14 hinsichtlich der zu überwindenden Fahrstrecke sicherstellt, dass die Operation des Elektro- oder Hybridfahrzeugs in optimaler Weise erfolgt.

Dies findet beispielsweise seinen Niederschlag darin, dass über das Master-Steuergerät 12, 12' beispielsweise bei hohen Außentemperaturen unmittelbar, d.h. direkt auf das Kühlsystem 26, welches der Batterie 22 bzw. dem Batteriesystem 22 zugeordnet ist, eingewirkt werden kann. Des Weiteren ist es möglich, über die zentrale Steuerinstanz, d.h. das Master-Steuergerät 12 durch Reduzierung der Drehmoment-Anforderung des Fahrzeugs und d.h. damit der Fahrzeugleistung auf die Leistungselektronik 18, über welche der E-Antrieb 20 geregelt wird, einzuwirken. Im Master-Steuergerät 12, 12' sind darüber hinaus adaptive Steuerungen/Regelungen implementiert, die das Gesamtsystem Elektrofahrzeug oder Hybridfahrzeug in optimaler Weise auf die Fahrweise des Fahrers bzw. auf die zu erwartenden Fahrsituationen abstimmen. So können Informationen, die über das Navigationssystem 14 an das Master-Steuergerät 12 übermittelt werden zur Optimierung der Reichweite des Elektro- oder Hybridfahrzeugs herangezogen werden, da Informationen über die zu erwartende Fahrstrecke unmittelbar vorliegen.

Das Auslagern von Funktionalitäten aus dem Batteriemanagementsystem 24, der Leistungselektronik 18 und gegebenenfalls anderer Komponenten, vergleiche zusätzliche Anschlüsse 28 auf ein Master-Steuergerät 12, 12' bietet technische und wirtschaftliche Vorteile, da nicht mehr jedes System für sich als ein geschlossenes System ausgebildet werden muss. Durch die erfindungsgemäß vorgeschlagene Lösung kommuniziert nunmehr nicht mehr nur eine Anzahl unabhängiger Steuergeräte miteinander, was die Folge hat, dass die Effizienz des Fahrzeugs nicht mehr davon abhängt, wie gut die Kommunikation auf einem Fahrzeugdatenbus verläuft, sondern vielmehr davon, dass eine übergeordnete Steuerinstanz in Gestalt eines Master-Steuergerätes 12, 12' bzw. einer dieses abbildenden Software-Funktionalität auf einem Steuergerät durch globale Koordination und Abstimmung der Betriebsparameter die Betriebsstrategie des Elektro- oder Hybridfahrzeugs koordiniert und schlussendlich bestimmt.

## Patentansprüche

1. Fahrzeugarchitektur (10) zur Steuerung und Regelung eines elektrischen Antriebes (20) eines Elektro- oder Hybridfahrzeugs, mit
einer Leistungselektronik (18), die einerseits mit dem elektrischen Antrieb (20) und einem Batteriesystem (22) verbunden ist, wobei die Leistungselektronik (18) derart eingerichtet ist, dass sie eine Drehmomentenanforderung des elektrischen Antriebs (20) steuert [Seite 4, Zeile 28 ff.], und einem Batteriemanagementsystem (24), das dem Batteriesystem (22)zugeordnet ist, wobei das Batteriemanagementsystem (24) derart eingerichtet ist, dass es das Batteriesystem (22) überwacht und ein Kühlsystem (26) des Batteriesystems (22) steuert [Seite 3, Zeile 9 ff., 15 ff.], die Fahrzeugarchitektur (10) ein Master-Steuergerät (12, 12') umfasst, oder ein Steuergerät mit einer Masterfunktionalität ausgestattet ist, in welches Funktionalitäten zumindest des Batteriemanagementsystems (24) und der Leistungselektronik (18) des E-Antriebs (20) ausgelagert sind, **dadurch gekennzeichnet, dass** das Master-Steuergerät (12, 12') mit dem Batteriemanagementsystem (24), der Leistungselektronik (18) und mit einem Navigationssystem (14) zum Empfangen von Betriebsparametern [S5, Z4-11; Fig. 1] verbunden ist,
wobei das Master-Steuergerät (12, 12') konfiguriert ist, um eine Betriebsstrategie des Elektro- oder Hybridfahrzeugs durch eine globale Koordination und Abstimmung der Betriebsparameter zu bestimmen [S5, Z4-11; Fig. 1];
wobei das Master-Steuergerät (12, 12') zum Steuern des Kühlsystems (26) das Batteriemanagementsystem (24) auf der Basis von den empfangenen Betriebsparametern des Navigationssystems (14) einwirkt [Seite 7, Zeile 1-11; Seite 8, Zeile 13-25], und
wobei das Master-Steuergerät (12, 12') zum Reduzieren des Drehmoments des elektrischen Antriebs (20) auf die Leistungselektronik (18), über welche der elektrische Antrieb (20) geregelt wird, auf der Basis von den empfangenen Betriebsparametern des Navigationssystems (14) einwirkt [Seite 8, Zeilen 13-25; Ansprüche 2, 3] .

2. Fahrzeugarchitektur (10) gemäß einem der vorhergehenden Ansprüche, **dadurch gekennzeichnet, dass** das Master-Steuergerät (12, 12') derart eingerichtet ist, dass aus den Informationen des Navigationssystems (14) eine Reichweitenoptimierung für die zu erwartende Fahrstrecke vorgenommen wird.

3. Fahrzeugarchitektur (10) gemäß einem der vorhergehenden Ansprüche, **dadurch gekennzeichnet, dass** das Master-Steuergerät (12, 12') eingerichtet ist, über zusätzliche Anschlüsse (28) eine oder mehrere der nachfolgenden Fahrzeugkomponenten zu steuern oder zu regeln:
- einen elektrischen Klimaanlagenkompressor (30),
- einen AC/DC-Wandler (32),
- mindestens ein Heizgerät (34),
- eine Gleichstrom-Schnellladeschnittstelle (36),
- eine DC/DC-Wandler (38) für ein Fahrzeug-Bordnetz

4. Verfahren zur Steuerung und Regelung eines elektrischen Antriebs (20) eines Elektro- oder Hybridfahrzeug **gekennzeichnet durch** die nachfolgenden Verfahrensschritte:
a) Der Übermittlung von Informationen eines Navigationssystems (14) an ein Master-Steuergerät (12, 12') einer Fahrzeugarchitektur (10)
nach einem der vorhergehenden Ansprüche,
b) dem Ansteuern eines Kühlsystems (26) für eine Batterie oder ein Batteriesystem (22) zur Reichweitenoptimierung für eine zu erwartende Fahrstrecke und
c) der Reduktion einer Drehmomentanforderung des Fahrzeugs durch Einwirkung auf eine Leistungselektronik (18) des E-Antriebs (20).

5. Verfahren gemäß Anspruch 4, **dadurch gekennzeichnet, dass** die Informationen des Navigationssystems (14) zur Optimierung der Operation des Fahrzeugs verwendet werden

6. Verfahren gemäß einem der beiden vorhergehenden Ansprüche, **dadurch gekennzeichnet, dass** im Master-Steuergerät (12, 12') adaptive Steuerungen und/oder adaptive Regelungen implementiert sind, die auf die Fahrweise des Fahrers und/oder die zu erwartende Fahrsituation abgestimmt sind.

## Claims

1. Vehicle architecture (10) for controlling and regulating an electrical drive (20) of an electric or hybrid vehicle, having power electronics (18) which are connected to the electrical drive (20), on the one hand, and to a battery system (22), wherein the power electronics (18) are set up in such a manner that they control a torque requirement of the electrical drive (20) [page 4, line 28 ff.], and a battery management system (24) which is assigned to the battery system (22), wherein the battery management system (24) is set up in such a manner that it monitors the battery system (22) and controls a cooling system (26) of the battery system (22) [page 3, line 9 ff., line 15 ff.], the vehicle architecture (10) comprises a master control device (12, 12'), or a control device is equipped with a master functionality, to which functionalities of at least the battery management system (24) and of the power electronics (18) of the electrical drive (20) are transferred,
**characterized in that** the master control device (12, 12') is connected to for receiving operating parameters [page 5, lines 4-11; Fig. 1], the battery management system (24), the power electronics (18) and to a navigation system (14),
wherein the master control device (12, 12') is configured to determine an operating strategy of the electric or hybrid vehicle by globally coordinating and matching the operating parameters [page 5, lines 4-11; Fig. 1];
wherein the master control device (12, 12') acts on the battery management system (24) on the basis of the received operating parameters of the navigation system (14) in order to control the cooling system (26) [page 7, lines 1-11; page 8, lines 13-25],
and
wherein the master control device (12, 12') acts on the power electronics (18), which are used to regulate the electrical drive (20), on the basis of the received operating parameters of the navigation system (14) in order to reduce the torque of the electrical drive (20) [page 8, lines 13-25; Claims 2, 3].

2. Vehicle architecture (10) according to one of the preceding claims, **characterized in that** the master control device (12, 12') is set up in such a manner that the range for the expected route is optimized using the information from the navigation system (14).

3. Vehicle architecture (10) according to one of the preceding claims, **characterized in that** the master control device (12, 12') is set up to control or regulate one or more of the following vehicle components via additional connections (28):
- an electrical air-conditioning system compressor (30),
- an AC/DC converter (32),
- at least one heating device (34),
- a DC quick-charging interface (36),
- a DC/DC converter (38) for a vehicle electrical system.

4. Method for controlling and regulating an electrical drive (20) of an electric or hybrid vehicle, **characterized by** the following method steps:
a) information from a navigation system (14) is transmitted to a master control device (12, 12') of a vehicle architecture (10) according to one of the preceding claims,
b) a cooling system (26) for a battery or a battery system (22) is controlled in order to optimize the range for an expected route, and
c) a torque requirement of the vehicle is reduced by acting on power electronics (18) of the electrical drive (20).

5. Method according to Claim 4, **characterized in that** the information from the navigation system (14) is used to optimize the operation of the vehicle.

6. Method according to one of the two preceding claims, **characterized in that** adaptive control systems and/or adaptive regulating systems are implemented in the master control device (12, 12') and are matched to the driver's driving style and/or to the expected driving situation.

## Revendications

1. Architecture de véhicule (10) pour la commande et la régulation d'un entraînement électrique (20) d'un véhicule électrique ou hybride, avec
une électronique de puissance (18), qui est reliée d'une part à l'entraînement électrique (20) et à un système de batteries (22), dans laquelle l'électronique de puissance (18) est configurée de telle manière qu'elle commande une demande de couple de l'entraînement électrique (20) [page 4, ligne 28 et svv.], et un système de gestion de batteries (24), qui est associé au système de batteries (22), dans laquelle le système de gestion de batteries (24) est configuré de telle manière qu'il surveille le système de batteries (22) et commande un système de refroidissement (26) du système de batteries (22) [page 3, lignes 9 et svv., 15 et svv.], l'architecture de véhicule (10) comprend un appareil de commande maître (12, 12'), ou un appareil de commande est doté d'une fonctionnalité maître, dans lequel des fonctionnalités au moins du système de gestion de batteries (24) et de l'électronique de puissance (18) de l'entraînement électrique (20) sont externalisées,
**caractérisée en ce que** l'appareil de commande maître (12, 12') est relié au système de gestion de batteries (24), à l'électronique de puissance (18) et à un système de navigation (14) pour recevoir des paramètres de fonctionnement [page 5, lignes 4-11; Fig. 1],
dans laquelle l'appareil de commande maître (12, 12') est configuré pour déterminer une stratégie de fonctionnement du véhicule électrique ou hybride par une coordination globale et une mise en concordance des paramètres de fonctionnement [page 5, lignes 4-11; Fig. 1];
dans laquelle l'appareil de commande maître (12, 12') agit pour commander le système de refroidissement (26) sur le système de gestion de batteries (24) sur la base des paramètres de fonctionnement du système de navigation (14) reçus [page 7, lignes 1-11; page 8, lignes 13-25], et
dans laquelle l'appareil de commande maître (12, 12') agit pour réduire le couple de l'entraînement électrique (20) sur l'électronique de puissance (18), par laquelle l'entraînement électrique (20) est régulé, sur la base des paramètres de fonctionnement du système de navigation (14) reçus [page 8, lignes 13-25; revendications 2, 3].

2. Architecture de véhicule (10) selon la revendication précédente, **caractérisée en ce que** l'appareil de commande maître (12, 12') est configuré de telle manière que l'on opère une optimisation de l'autonomie pour le trajet envisagé à partir des informations du système de navigation (14).

3. Architecture de véhicule (10) selon l'une quelconque des revendications précédentes, **caractérisée en ce que** l'appareil de commande maître (12, 12') est configuré pour commander, par des raccords supplémentaires (28), un ou plusieurs des composants suivants du véhicule:
- un compresseur électrique d'une installation de climatisation (30),
- un convertisseur AC/DC (32),
- au moins un appareil de chauffage (34),
- une interface de charge rapide à courant continu (36),
- un convertisseur DC/DC (38) pour un réseau de bord du véhicule.

4. Procédé de commande et de régulation d'un entraînement électrique (20) d'un véhicule électrique ou hybride, **caractérisé par** les étapes de procédé suivantes:
a) la transmission d'informations d'un système de navigation (14) à un appareil de commande maître (12, 12') d'une architecture de véhicule (10) selon l'une quelconque des revendications précédentes;
b) la commande d'un système de refroidissement (26) pour une batterie ou un système de batteries (22) pour l'optimisation de l'autonomie en vue d'un trajet envisagé, et
c) la réduction d'une demande de couple du véhicule par action sur l'électronique de puissance (18) de l'entraînement électrique (20).

5. Procédé selon la revendication 4, **caractérisé en ce que** l'on utilise les informations du système de navigation (14) pour l'optimisation du fonctionnement du véhicule.

6. Procédé selon une des deux revendications précédentes, **caractérisé en ce que** des commandes adaptatives et/ou des régulations adaptatives sont implémentées dans l'appareil de commande maître (12, 12'), et sont accordées au mode de conduite du conducteur et/ou à la situation de conduite envisagée.
